Europäisches Patentamt

European Patent Office

Office européen des brevets

(19)

(11) Veröffentlichungsnummer: **0 225 448**

**A1**

(12) # EUROPÄISCHE PATENTANMELDUNG

(21) Anmeldenummer: 86113914.5

(22) Anmeldetag: 07.10.86

(51) Int. Cl.⁴: **F16L 37/12** , F02M 35/04

(30) Priorität: 11.10.85 DE 3536376

(43) Veröffentlichungstag der Anmeldung:
16.06.87 Patentblatt 87/25

(84) Benannte Vertragsstaaten:
**DE FR GB IT SE**

(71) Anmelder: **BAYERISCHE MOTOREN WERKE
Aktiengesellschaft
Postfach 40 02 40 Petuelring 130 - AJ-36
D-8000 München 40(DE)**

(72) Erfinder: **Brücklmeier, Josef
Am Sportplatz 10
D-8301 Rudelzhausen(DE)**

(74) Vertreter: **Bücken, Helmut
Bayerische Motoren Werke
Aktiengesellschaft Postfach 40 02 40
Petuelring 130 - AJ-30
D-8000 München 40(DE)**

(54) Lösbare Steckverbindung zwischen Bauteilen.

(57) Eine lösbare Steckverbindung zwischen einem Ansaugluftfilter-und/oder Geräuschdämpfer-Gehäuse (1) und einem Luftmassenmesser (3) umfaßt an einem der Teile einen Bund (4) und am anderen der Teile einen den Bund aufnehmenden Anschlußstutzen (2), wobei ferner Mittel zur gegenseitigen Fixierung der vorgenannten Teile vorgesehen sind.

Zu Erzielung einer lösbaren Steckverbindung ohne Montageaufwand wird die Anwendung eines an sich bekannten, elastischen Rastmittels (Zunge 9) an einem der Teile und ein am anderen Teil zur Steckrichtung quer angeordneter Rastanschlag (Halteflansch 5) vorgeschlagen, mit dem das Rastmittel - (Zunge 9) beim Zusammenstecken der Teile - (Gehäuse 1, Luftmassenmesser 3) selbsttätig in Eingriff tritt.

Fig. 1

EP 0 225 448 A1

## Lösbare Steckverbindung zwischen Bauteilen

Bei einer nach dem Oberbegriff des Hauptanspruches bekannten Steckverbindung zwischen einem Ansaugluftfilter-und/oder Geräuschdämpfer-Gehäuse und einem Luftmassenmesser sind zur gegenseitigen Fixierung des Luftmassenmessers am Ansaugluftfilter-und/oder Geräuschdämpfer-Gehäuse selbstschneidende Schrauben vorgesehen, die einen am Luftmassenmesser angeordneten Halteflansch in Steckrichtung durchsetzen und in die Wand des Anschlußstutzens eingeschraubt werden. Bei einer anderen bekannten Steckverbindung nach dem Oberbegriff des Hauptanspruches sind am Anschlußstutzen des Ansaugluftfilter-und/oder Geräuschdämpfer-Gehäuses Spannbügel angeordnet, die zur Fixierung des in den Ansaugstutzen eingesteckten Luftmassenmessers dienen.

Diese gesonderten Mittel zur gegenseitigen Fixierung der vorgenannten Teile erfordern einen zusätzlichen Montageaufwand.

Dieser Aufwand bei der Montage eines Luftmassenmessers am Anschlußstutzen eines Gehäuses ist nach dem Kennzeichen des Hauptanspruches durch die Anwendung von an sich bekannten, beim Einstecken des Luftmassenmessers in den Ansaugstutzen in Rastanschläge selbsttätig eingreifende Rastmittel vermieden, die vorteilhafterweise sowohl die Lagesicherung als auch die Halterung des Luftmassenmessers am Gehäuse bewirken.

Nach dem eingangs geschilderten St.d.T. wurde der Luftmassenmesser bisher mit dem Gehäuse aufwendig durch eine relativ starre Verbindung gekuppelt, obwohl beispielsweise aus der DE-OS 31 25 432 ein aus Kunststoff gefertigtes Ansaugluftfilter-und Geräuschdämpfer-Gehäuse bekannt ist mit einem Anschlußstutzen, in den ein Schnorchel eingesteckt und durch Rastverbindung gehalten ist. Mit dem im Kennzeichen des Hauptanspruches beschriebenen Vorschlag ist somit ein mögliches Vorurteil überwunden, daß eine notwendigerweise mit Spiel behaftete Rastverbindung zur Fixierung eines relativ schweren Luftmassenmessers im Anschlußstutzen eines Ansaugluftfilter-und/oder Geräuschdämpfer-Gehäuses keine betriebssichere Halterung ist, insbesondere bei kurzbauender Steckverbindung.

Um bei kurzbauender Steckverbindung eine Beschädigung der Rastverbindung durch Schwingungen des Luftmassenmessers zu vermeiden, ist in Ausgestaltung der Erfindung nach Anspruch 2 eine elastisch nachgiebige Zentriereinrichtung zwischen Gehäuse-Anschlußstutzen und Luftmassenmesser-Bund im geringen Abstand zur Rastverbindung angeordnet, die zur Schwingungsdämpfung und damit zur Stabilisierung des Luftmassenmessers dient.

In weiterer Ausgestaltung der Erfindung nach Anspruch 3 ist die von der Rastverbindung aufzubringende Doppelfunktion der Fixierung des Luftmassenmessers gegen Verschiebung und Verdrehung nach erstem Kennzeichenmerkmal in vorteilhafter Weise durch am Anschlußstutzen einstückig angeformte, lappenartige Fortsätze erzielt, die im Halteflansch angeordnete Durchbrechungen durchsetzen und dabei als Vedrehanschläge des Luftmassenmessers dienen. Weiter weisen diese Fortsätze jeweils in ihrem mittleren Bereich eine freigestellte, über den Fortsatz vorstehende, biegeelastische Zunge auf, die eine Verschiebung des Luftmassenmessers durch Anschlagen am Halteflansch verhindert. Diese im Aufbau einfache Ausgestaltung von Rastmittel und Fortsatz kann ohne Schwierigkeit mit dem Anschlußstutzen bzw. dem Gehäuse in Gußgestaltung aus Kunststoff vorgesehen werden, womit gesonderte Rastmittel vermieden sind.

Eine bevorzugte Anordnung der Zunge ist mit Merkmalen des Anspruches 4 erzielt, wonach die Zunge mit ihrer Längserstreckung zur Steckrichtung gleichgerichtet angeordnet ist und die Zunge im freien Eindbereich des Fortsatzes mit diesem einstückig in Verbindung steht. Erreicht wird damit eine relativ lange und damit biegweiche Zunge, die beim Zusammenstecken von Luftmassenmesser und Gehäuse sich selbst zum Passieren der Durchbrechung im Halteflansch einstellt ohne dabei einen nennenswerten Widerstand aufzubringen. Weiter kann durch diese Gestaltung die Rastverbindung mit geringem Kraftaufwand gelöst werden. Außerdem ist mit einem langhebeligen Rastmittel die Bruchgefahr bei der Montage wesentlich vermindert, da eine Überbeanspruchung des Werkstoffes vermieden ist.

In den Ansprüchen 5 und 6 sind weitere denkbare Ausgestaltungen beschrieben.

Schließlich beschreibt Anspruch 7 eine bevorzugte Ausgestaltung der in Anspruch 2 angegebenen Zentriereinrichtung. Die bevorzugte Ausgestaltung ermöglicht nicht nur eine Dämpfung von quer zur Längsachse des Luftmassenmessers gerichteten Schwingungen, sondern ·wirkt auch Drehschwingungen um die Längsachse entgegen, so daß eine Beschädigung der die Rastzungen tragenden und als Drehanschläge dienenden Fortsätze unterbleibt.

Ein Ausführungsbeispiel der Erfindung ist in der Zeichnung dargestellt. Es zeigt:

Fig. 1 eine Steckverbindung eines Luftmassenmessers mit einem Ansaugluftfilter-und/oder Geräuschdämpfer-Gehäuse, in teilweiser Darstellung,

Fig. 2 den Anchlußstutzen in Frontalansicht gemäß Pfeil "A", teilweise dargestellt.

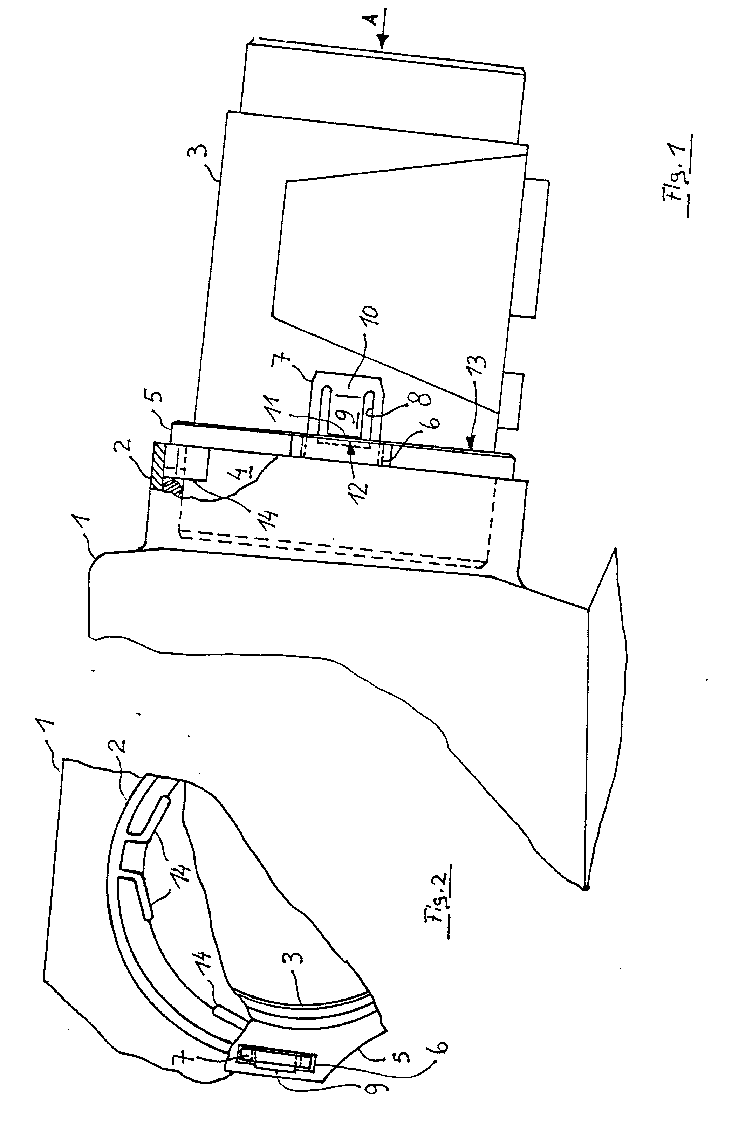

Ein aus Kunststoff gefertigtes Ansaugluftfilter- und Geräuschdampfer-Gehäuse 1 weist einen angeformten Anchlußstutzen 2 auf, in den ein Luftmassenmesser 3 mit seinem Bund 4 eingesteckt ist. Der Luftmassenmesser 3 weist ferner einen Halteflansch 5 mit zur Steckrichtung parallelen Durchbrechungen auf, von denen die gezeigte Durchbrechung mit 6 bezeichnet ist. Die Durchbrechung 6 wird mit Spiel von einem am Anschlußstutzen 2 einstückig angeformten, lappenartigen Fortsatz 7 durchsetzt. Im Fortsatz 7 ist eine durch einen U-förmigen Freischnitt bzw. Durchbrechung 8 freigestellte Zunge 9 ausgebildet. Die Zunge 9 ist mit ihrer Längserstreckung zur Steckrichtung des Luftmassenmessers 3 gleichgerichtet angeordnet, wobei die Zunge 9 im freien Endbereich 10 des Fortsatzes 7 mit diesem einstückig in Verbindung steht. Die biegeelastisch nachgiebige Zunge 9 ist ferner quer zur Steckrichtung aus dem Fortsatz um ein solches Maß vorstehend ausgebildet, daß ihre der einstückigen Verbindung mit dem Fortsatz 7 gegenüberliegende, über die Breite der Zunge 9 sich erstreckende Schmalseite 11 als Sperranschlag 12 dient. Bei in den Anschlußstutzen 2 auf Anschlag eingesteckten Luftmassenmesser 3 liegt die Zunge 9 mit ihrem Sperranschlag 12 dem als Rastanschlag 13 dienenden Halteflansche 5 gegenüber. Mit der Zunge 9 ist ein Rastmittel erzielt, das beim Zusammenstecken von Luftmassenmesser 3 und Gehäuse 1 selbsttätig in Eingriff tritt und den Luftmassenmesser 3 gegen axiale Verlagerung sichert bzw. haltert. Der die Zunge 9 tragende Fortsatz 7 bildet mit seinem in der Durchbrechung 6 des Halteflansches 5 am Luftmassenmesser 3 verbleibenden Teil einen Verdrehanschlag für den Luftmassenmesser 3.

Am Innenumfang des Anschlußstutzens 2 sind gleichmäßig verteilt biegeelastische Arme 14 vorgesehen, die paarweise V-förmig angeordnet sind. Die Arme 14 bilden eine elastisch nachgiebige Zentriereinrichtung zwischen Anschlußstutzen 2 und Bund 4, die in geringem Abstand zur Rastverbindung angeordnet ist. Sie dient der Schwingungsdämpfung des Luftmassenmessers 3, wobei die Arme 14 mit dem eingesteckten Bund 4 jeweils in reibschlüssiger Verbindung stehen. 79

## Ansprüche

1. Lösbare Steckverbindung zwischen Bauteilen,
-von denen eines einen Bund (4) und das andere einen den Bund aufnehmenden Anschlußstutzen - (2) aufweist, und ferner
-Mittel zur gegenseitigen Fixierung der vorgenannten Teile vorgesehen sind,
-gekennzeichnet durch die Anwendung eines an sich bekannten, elastischen Rastmittels (Zunge 9) an einem der Teile und
-eines am anderen Teil zur Steckrichtung quer angeordneten Rastanschlages (13),
-mit dem das Rastmittel (Zunge 9) beim Zusammenstecken der Teile selbsttätig in Eingriff tritt.

2. Steckverbindung nach Anspruch 1, dadurch gekennzeichnet,
-daß eine elastische nachgiebige Zentriereinrichtung (Arme 14) zwischen Anschlußstutzen (2) und Bund (4) im geringen Abstand zur Rastverbindung angeordnet ist,
-die der Schwingungsdämpfung des eingesteckten Teiles dient.

3. Steckverbindung nach Anspruch 1 und 2, zwischen einem Ansaugluftfilter-und/oder Geräuschdämpfer-Gehäuse und einem Luftmassenmesser, insbesondere für Brennkraftmaschinen,
-bei der das aus Kunststoff gefertigte Ansaugluftfilter-und/oder Geräuschdämpfer-Gehäuse (1) einen angeformten Anschlußstutzen - (2) und
-der Luftmassenmesser (3) einen Halteflansch (5) mit zur Steckrichtung parallelen Durchbrechungen - (6) aufweist, dadurch gekennzeichnet,
-daß der Anschlußstutzen (2) die Durchbrechungen (6) mit Spiel durchsetzende, lappenartige Fortsätze (7) aufweist,
-wobei jeder einstückig angeformte Fortsatz (7) eine durch einen U-förmigen Freischnitt - (Durchbrechung 8) begrenzte Zunge (9) aufweist,
-die quer zur Steckrichtung aus dem Fortsatz (7) vorstehend ausgebildet ist, und wobei
-die biegeelastisch nachgiebige Zunge (9) mit einer ihrer dem Freischnitt (Durchbrechung 8) zugewandten Schmalseiten (11) einen Sperranschlag (12) bildet,
-der mit dem als Rastanschlag (13) dienenden Halteflansch (5) zusammenwirkt.

4. Steckverbindung nach Anspruch 3, dadurch gekennzeichnet,
-daß die Zunge (9) mit ihrer Längserstreckung zur Steckrichtung gleichgerichtet angeordnet ist.
-wobei die Zunge (9) im freien Endbereich (10) des Fortsatzes (7) mit diesem einstückig in Verbindung steht, und

-die dieser Verbindung gegenüberliegende, über die Breite der Zunge (9) sich erstreckende Schmalseite (11) als Sperranschlag (12) dient.

5. Steckverbindung nach Anspruch 3, dadurch gekennzeichnet,
-daß die Zunge mit ihrer Längserstreckung quer zur Steckrichtung angeordnet ist, wobei
-eine zur Längserstreckung gleichgerichtete Schmalseite der Zunge als Sperranschlag dient.

6. Steckverbindung nach Anspruch 3, dadurch gekennzeichnet,
-daß ein Fortsatz mehrere Zungen aufweist,
-die wechselseitig aus dem Fortsatz vorstehend ausgebildet sind.

7. Steckverbindung nach einem oder mehreren der Ansprüche 2 bis 5, dadurch gekennzeichnet,
-daß die Zentriereinrichtung am Innenumfang des Anschlußstutzens (2) verteilt angeordnete, biegeelastische Arme (14) umfaßt,
-die paarweise V-förmig angeordnet sind und
-mit dem eingesteckten Bund (4) jeweils in reibschlüssiger Verbindung stehen.

Fig.2

Fig.1

0 225 448

**Europäisches Patentamt**

# EUROPÄISCHER RECHERCHENBERICHT

Nummer der Anmeldung

EP 86 11 3914

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 035 005 (DE VINCENT et al.) <br> * Anspruch 1; Figuren 3-5 * | 1 | F 16 L 37/12 <br> F 02 M 35/04 |
| A | | 2-5 | |
| | --- | | |
| X | FR-A-2 188 064 (MARSEILIAN) <br> * Seite 5, Zeilen 18-24; Figuren 6-9 * | 1 | |
| A | | 3 | |
| | --- | | |
| X | US-A-3 933 378 (SANDFORD et al.) <br> * Anspruch 1; Figur 1 * | 1 | |
| A | | 2-5 | RECHERCHIERTE SACHGEBIETE (Int. Cl.4) <br><br> F 16 L 37/00 <br> F 16 L 21/00 <br> F 02 M 35/00 |
| | --- | | |
| A | US-A-4 349 222 (TAKASAKI et al.) <br> * Anspruch 1; Figur 3 * | 3 | |
| | --- | | |
| A | US-A-3 672 708 (ZEMBERRY) <br> * Anspruch 1; Figuren 3-4A * | 6 | |
| | ----- | | |

Der vorliegende Recherchenbericht wurde für alle Patentansprüche erstellt.

| Recherchenort <br> BERLIN | Abschlußdatum der Recherche <br> 17-12-1986 | Prüfer <br> GRUNFELD D.P. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82